Europäisches Patentamt

European Patent Office

Office européen des brevets

(19)

(11)  **EP 1 219 012 B1**

(12)  # FASCICULE DE BREVET EUROPEEN

(45) Date de publication et mention
de la délivrance du brevet:
**23.04.2003 Bulletin 2003/17**

(21) Numéro de dépôt: **00964341.2**

(22) Date de dépôt: **21.09.2000**

(51) Int Cl.⁷: **H02P 6/14**, H02P 7/05

(86) Numéro de dépôt international:
**PCT/FR00/02619**

(87) Numéro de publication internationale:
**WO 01/028083 (19.04.2001 Gazette 2001/16)**

(54) **ENSEMBLE MOTEUR A COMMUTATION ELECTRONIQUE, DISPOSITIF D'ALIMENTATION DUDIT MOTEUR ET ASPIRATEUR ELECTRIQUE EQUIPE DUDIT ENSEMBLE**

ANORDNUNG FÜR EINEN ELEKTRONISCH KOMMUTIERTEN MOTOR, VORRICHTUNG ZUR VERSORGUNG DIESES MOTORS UND ELEKTRISCHER STAUBSAUGER MIT DIESER ANORDNUNG

MOTOR ASSEMBLY WITH ELECTRONIC SWITCH, DEVICE POWERING SAID MOTOR AND ELECTRICAL VACUUM CLEANER EQUIPPED WITH SAID ASSEMBLY

(84) Etats contractants désignés:
**AT BE CH CY DE DK ES FI FR GB GR IE IT LI LU MC NL PT SE**

(30) Priorité: **08.10.1999 FR 9912788**

(43) Date de publication de la demande:
**03.07.2002 Bulletin 2002/27**

(73) Titulaire: **SEB S.A.**
**69130 Ecully (FR)**

(72) Inventeurs:
• **HERRADA, José**
**F-24200 Vernon (FR)**

• **DANCER, Paul**
**F-42100 Saint Etienne (FR)**

(74) Mandataire: **Kiehl, Hubert**
**SEB Développement,**
**Les 4 M-Chemin du Petit Bois,**
**B.P. 172**
**69132 Ecully Cedex (FR)**

(56) Documents cités:
WO-A-90/03063           WO-A-90/13941
FR-A- 2 478 896

## Description

### Domaine Technique

L'invention concerne un circuit d'alimentation d'un moteur à commutation électronique, par exemple du type courant continu sans collecteur ou à réluctance variable. Plus précisément, il concerne de tels circuits d'alimentation destinés à être reliés à un réseau d'alimentation en tension alternative. Elle vise plus spécifiquement la configuration du circuit d'alimentation, en ce qui concerne le filtre de tension relié à la sortie d'un pont redresseur lui-même relié au réseau d'alimentation alternatif.

### Techniques antérieures

De façon connue, les moteurs à commutation électronique tels que notamment les moteurs sans collecteur, du type "brushless", peuvent être alimentés à partir du réseau alternatif par l'intermédiaire d'un circuit d'alimentation incluant un pont redresseur, un filtre capacitif et une structure d'onduleur de tension.

Dans la suite de la description et pour faciliter la compréhension du fonctionnement, la structure d'onduleur de tension est un pont en H comportant quatre interrupteurs statiques, mais l'invention n'est pas limitée à l'utilisation de quatre interrupteurs, l'invention couvrant tous les types de moteur donc tous les types de commande.

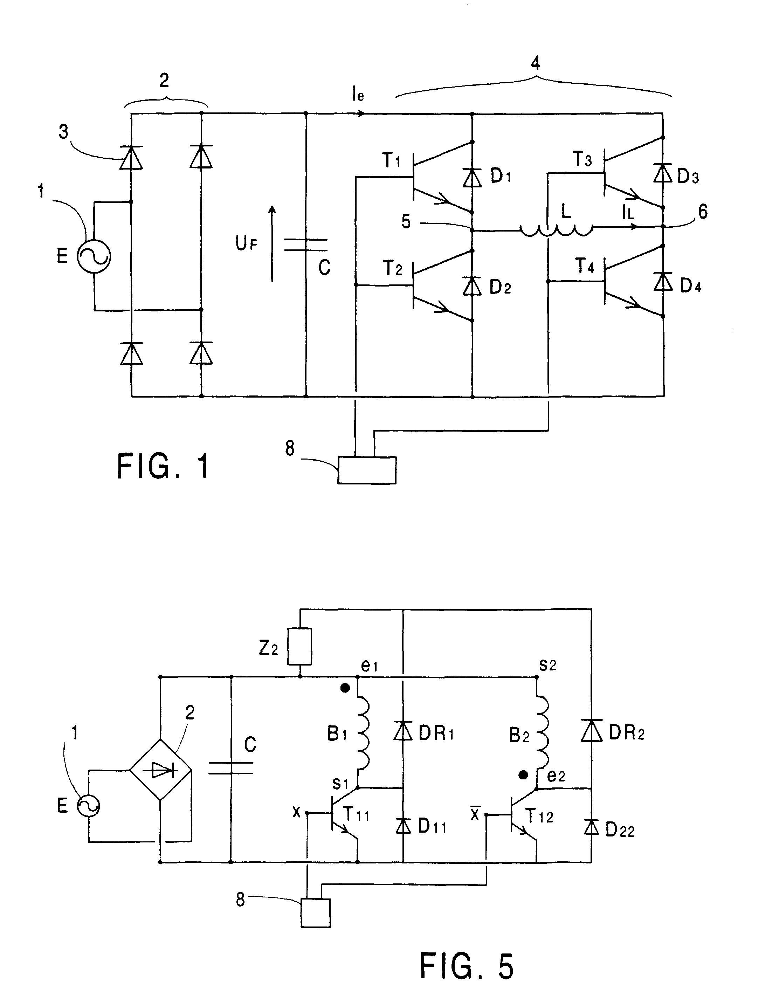

Plus précisément et comme illustré à la figure 1, la structure d'onduleur de tension comporte deux bras connectés aux bornes d'un filtre capacitif, et comprenant chacun deux interrupteurs statiques constitués, en fonction de la puissance nécessaire du moteur, par des transistors bipolaires, des transistors à effet de champs, ou des IGBT, équipés chacun d'une diode de roue libre en antiparallèle.

Ces différents interrupteurs statiques sont commandés en opposition de manière à soumettre l'inductance de phase du moteur à la tension du filtre capacitif ou à son opposé.

Dans le schéma de principe illustré à la figure 1, le filtre capacitif mis en place à la sortie du pont redresseur a pour objet de maintenir la tension en sortie du pont redresseur et donc à l'entrée de l'onduleur, à une valeur aussi constante que possible pour assurer une alimentation constante en énergie du moteur.

De façon générale, le filtre capacitif est constitué d'un condensateur de relativement forte valeur, destiné à limiter les chutes de tension aux bornes de l'onduleur entre deux alternances de la tension d'alimentation du réseau.

Par ailleurs, la tension continue maintenue aux bornes de l'onduleur a pour effet, lors des phénomènes de commutation des bras de l'onduleur, d'assurer une décroissance du courant à l'intérieur d'une phase du moteur.

En effet, après l'extinction des interrupteurs de puissance $T_1$ et $T_4$, le courant dans la phase du moteur est conduit par les diodes de roue libre $D_2$ et $D_3$, ce qui a pour effet de soumettre la phase moteur à une tension opposée à la tension à laquelle elle était soumise lorsque les interrupteurs $T_1$ et $T_4$ étaient en conduction.

Le courant circulant dans les diodes de roue libre $D_2$ et $D_3$ charge en partie la capacité du filtre d'entrée, provoquant par là même l'augmentation de la tension filtre. L'augmentation de cette tension accélère donc la décroissance du courant et donc son extinction.

Un premier problème que se propose de résoudre l'invention est donc celui de la rapidité de l'extinction du courant dans les phases du moteur.

Malheureusement, dans le schéma traditionnel illustré à la figure 1, l'augmentation de tension engendrée par le courant circulant dans les diodes de roue libre n'est pas suffisamment significative car le condensateur présente une impédance relativement faible à la fréquence de fonctionnement de l'onduleur.

En effet, ce condensateur est généralement défini pour filtrer une fréquence faible, égale à deux fois la fréquence du réseau, qui est très largement inférieure à la fréquence de fonctionnement de l'onduleur.

Pour assurer une commutation plus rapide, tout en conservant une tension filtre constante lors des phases de commutation, on a déjà proposé, dans les documents WO 90/03063, WO 90/13941 et WO 90/00909, d'interposer entre la borne positive du filtre capacitif et la borne positive de l'onduleur, un condensateur supplémentaire de relativement faible de valeur, auquel on adjoint une diode supplémentaire de redressement.

De la sorte, lorsque la conduction du courant se fait par les diodes de roue libre, la diode supplémentaire en antiparallèle reste bloquée et le condensateur supplémentaire se charge, assurant ainsi la montée de la tension beaucoup plus rapidement que dans le schéma traditionnel de la figure 1.

Cette solution, si elle s'avère satisfaisante en ce qui concerne le temps d'extinction du courant, présente en revanche l'inconvénient majeur de nécessiter des composants supplémentaires dont le coût augmente le prix de revient global de l'appareil dans lequel le moteur est installé.

En outre, ces composants supplémentaires sont soumis aux tensions maximales du circuit d'alimentation, ce qui nécessite de prendre des précautions en termes d'isolation électrique, qui ont pour conséquence supplémentaire d'augmenter encore le prix global de l'appareil.

En outre, l'ajout de tels composants soumis à des tensions importantes, diminue la fiabilité globale de l'appareil.

Un autre problème que se propose de résoudre l'invention est celui de la fiabilité et la simplicité d'un dispositif d'alimentation destiné à équiper notamment des appareils produits en grande série, et dans lesquels le nombre de composants a un impact important sur le prix de revient de l'appareil.

Par ailleurs, on sait que l'ondulation du courant dans les phases du moteur se traduit par la présence d'harmoniques de tension aux bornes de la capacité du filtre continu, et par conséquent, la génération d'harmoniques de courants renvoyés sur le réseau alternatif.

La capacité du filtre de tension continue a donc une incidence sur la valeur des harmoniques de courant rejeté sur le réseau alternatif d'alimentation.

Or, les normes de construction des appareils électriques imposent des exigences quant au niveau de courants harmoniques rejetés sur le réseau.

Un autre problème que se propose de résoudre l'invention est celui de la limitation des perturbations harmoniques générées sur le réseau d'alimentation alternatif.

L'invention se propose donc de fournir un circuit d'alimentation permettant d'assurer une extinction et un établissement aussi rapides que possible du courant dans les bobinages du moteur, tout en limitant au minimum le nombre de composants nécessaires à cette extinction et en restant compatible avec les exigences normalisées concernant le rejet de courants harmoniques sur le réseau d'alimentation alternatif.

## Exposé de l'invention

L'invention concerne donc un ensemble moteur à commutation électronique, tel que notamment du type courant continu sans collecteur, et le dispositif d'alimentation de ce moteur à partir d'un réseau de tension alternative, de tension crête maximale $E_{max}$, composé :

- d'un pont redresseur connecté au réseau de tension alternative ;
- d'un filtre capacitif connecté en sortie du pont redresseur, constitué d'au moins un condensateur de capacité C ;
- d'un onduleur de tension connecté aux bornes du filtre capacitif, et comportant au moins un interrupteur statique, chaque interrupteur étant apte à supporter une tension maximale $V_{CE0}$ entre ses bornes ;
- d'un moteur à commutation électronique de puissance nominale P, et présentant une inductance de phase de valeur L.

Le dispositif d'alimentation conforme à l'invention se caractérise en ce que la capacité C du filtre capacitif est supérieure à :

$$\frac{5.P^2 L}{E_{max}^2 \left( V_{CE0}^2 - E_{max}^2 \right)}$$

et inférieure à :

$$\frac{500.P^2 L}{E_{max}^2 \left( V_{CE0}^2 - E_{max}^2 \right)}$$

Ainsi, l'invention consiste à sélectionner un condensateur destiné à servir de filtre d'entrée, dont la capacité est nettement inférieure à celle des condensateurs utilisés habituellement.

Le choix d'une valeur faible de capacité se traduit par une diminution du filtrage de la tension redressée par le pont redresseur et donc par le fait que l'onduleur fonctionne à partir d'une tension peu stabilisée, c'est-à-dire fortement variable.

Ce mode de fonctionnement se traduit par une augmentation des harmoniques de courant à l'intérieur du moteur, et donc une augmentation de la valeur efficace de ce courant pour une même valeur de courant utile.

Il s'ensuit que le moteur doit être surdimensionné par rapport à un moteur fonctionnant à partir d'une tension constante. Notamment, les bobinages de cuivre et les aimants du rotor doivent être de taille supérieure à ceux d'un moteur fonctionnant à partir d'une tension constante équivalente.

Néanmoins, ces désavantages sont de façon surprenante compensés par la possibilité de choisir un condensateur de filtre appartenant à une gamme différente, et dont le prix de revient est beaucoup plus faible que les condensateurs généralement utilisés, réalisés selon une technologie électrolytique.

En outre, le phénomène d'extinction du courant dans les phases moteur est accéléré.

Comme déjà dit, l'onduleur de tension peut adopter différentes architectures. Dans une forme de réalisation, il présente deux bras connectés aux bornes du filtre capacitif, chaque bras comportant deux interrupteurs statiques en série.

Dans une autre variante, l'onduleur de tension comporte deux bras connectés aux bornes du filtre capacitif, chaque bras comportant un seul interrupteur statique.

Avantageusement en pratique, le condensateur choisi est un condensateur polyester.

Selon une autre caractéristique de l'invention, le moteur comporte un nombre de pôles supérieur ou égal à quatre, et préférentiellement égal à six. De la sorte, pour une même valeur de flux à l'intérieur du moteur, donc de couple, on divise l'inductance de phase du moteur, par le nombre de paires de pôles. Ainsi, contrairement à la tendance générale qui consiste à diminuer le nombre de paires de pôles pour des moteurs tournant à des vitesses relativement importantes, l'invention présente un avantage, à l'inverse, d'augmenter le nombre de paires de pôles.

En effet, en approximation du premier ordre, l'inductance d'un bobinage est proportionnelle au carré de son nombre de spires, tandis que le flux parcouru par la bobine est proportionnel au produit du nombre de spires par le courant qui les parcourt.

Il s'ensuit qu'avec un nombre de pôles égal à quatre ou six, on diminue fortement la valeur du minimum de la plage de capacité conforme à l'invention.

De la sorte, il est possible de choisir selon l'invention un condensateur de faible valeur, dont le prix de revient est largement inférieur aux condensateurs habituellement utilisés, ce qui rend économiquement compétitif l'appareil dans lequel est monté le moteur conforme à l'invention.

## Description sommaire des figures

La manière de réaliser l'invention, ainsi que les avantages qui en découlent ressortiront bien de la description du mode de réalisation qui suit, à l'appui des figures annexées dans lesquelles :

La figure 1 est un schéma du circuit électrique d'alimentation et du moteur conforme à l'invention.
Les figures 2 et 3 sont des relevés d'écran d'oscilloscope illustrant respectivement la variation de la tension aux bornes du filtre capacitif, et la variation d'une valeur de courant proportionnelle au flux dans le moteur.
La figure 4 est un diagramme temporel illustrant la valeur du courant entrant dans l'onduleur.
La figure 5 est un schéma du circuit électrique conformément à une variante de réalisation dans laquelle l'onduleur comporte deux interrupteurs statiques.

## Manière de réaliser l'invention

Comme déjà dit, l'invention concerne un circuit d'alimentation d'un moteur tel que par exemple un moteur à commutation électronique "brushless", notamment destiné à des applications dans les domaines de l'électroménager, et en particulier pour les aspirateurs électriques.

Ainsi, comme illustré à la figure 1, le schéma d'un circuit d'alimentation est connecté au réseau 1 de tension alternative typiquement de valeur de 230 V efficaces

On sait que la valeur efficace de la tension du réseau peut varier d'environ 10% autour de sa valeur nominale. Cela signifie donc que la valeur efficace maximum peut atteindre 253 V sur un réseau alternatif de 230 V, ce qui correspond à une valeur crête maximale $E_{max}$ de 358 V.

Le circuit d'alimentation comprend donc un pont redresseur 2, constitué de quatre diodes 3 disposées conformément à la figure 1. Ce pont redresseur délivre une tension redressée au filtre capacitif constitué du condensateur C.

L'onduleur de tension 4 représenté à la figure 1 est connecté aux bornes du filtre capacitif C, et comprend deux bras identiques, présentant chacun deux transistors $T_1$, $T_2$, $T_3$, $T_4$, dont l'un est relié à la borne positive du filtre capacitif, tandis que l'autre est relié à la borne négative du filtre capacitif. Les bases des transistors $T_1$, $T_2$, $T_3$, $T_4$ sont connectées au circuit de commande 8 qui déclenche leur commutation.

Chacun des transistors ($T_1$-$T_4$), comprend une diode ($D_1$-$D_4$) connectée en antiparallèle.

Le point milieu (5-6) de chaque bras, auquel sont connectés les deux transistors ($T_1$, $T_2$, $T_3$, $T_4$) est relié également à une des bornes de la phase moteur, modélisée à la figure 1 par une inductance L, traversée par un courant $I_L$.

Les différents interrupteurs de puissance de chaque bras des onduleurs sont caractérisés par une valeur de tension maximale à laquelle ils ne doivent pas être soumis sous risque de dégradation, voire de destruction. Ainsi, dans le cas d'un transistor bipolaire, cette tension maximale est généralement connue sous l'abréviation de $V_{CE0}$ correspondant à la tension maximale entre le collecteur et l'émetteur.

Le moteur qu'alimente cet onduleur de tension est un moteur "brushless" ou un moteur à réluctance variable, dont la puissance nominale P et l'inductance de phase sont nécessaires pour déterminer la valeur de la capacité C du filtre d'entrée, conformément à l'invention.

Ainsi, comme déjà dit, selon une caractéristique de l'invention, la capacité du filtre d'entrée C est comprise entre les deux valeurs suivantes :

$$\frac{5.\,P^2 L}{E_{max}^2 \left( V_{CE0}^2 - E_{max}^2 \right)} \text{ et } \frac{500.\,P^2 L}{E_{max}^2 \left( V_{CE0}^2 - E_{max}^2 \right)}$$

dans lesquelles $E_{max}$ est la tension crête maximum du réseau alternatif, L est l'inductance d'une phase du moteur, P est la puissance nominale du moteur, et $V_{CE0}$ est la tension maximale à laquelle peuvent être soumis les transistors bipolaires.

Ainsi, dans un exemple particulier non limitatif, pour un moteur de l'ordre d'une puissance nominale de l'ordre de 1200 Watts, et présentant une inductance de phase de 2 mH, en utilisant des transistors dont la tension $V_{CE0}$ vaut 600 V, la capacité du filtre de tension continue en C peut être comprise entre 0,5 µF et 50 µF.

On remarque que cette valeur est largement inférieure à celle des condensateurs utilisés pour des applications similaires, qui est typiquement de l'ordre de 220 µF.

En choisissant le condensateur de filtrage dans cette plage de valeurs, on permet d'une part, d'assurer une extinction et un établissement du courant plus rapide que dans les schémas connus jusqu'alors, et d'autre part, de sélectionner un tel condensateur dans des gammes technologiques beaucoup moins coûteuses que celles des condensateurs électrolytiques jusqu'alors quasi exclusivement utilisés dans ce genre d'application.

Ainsi, le fonctionnement de l'onduleur est comme décrit ci-après.

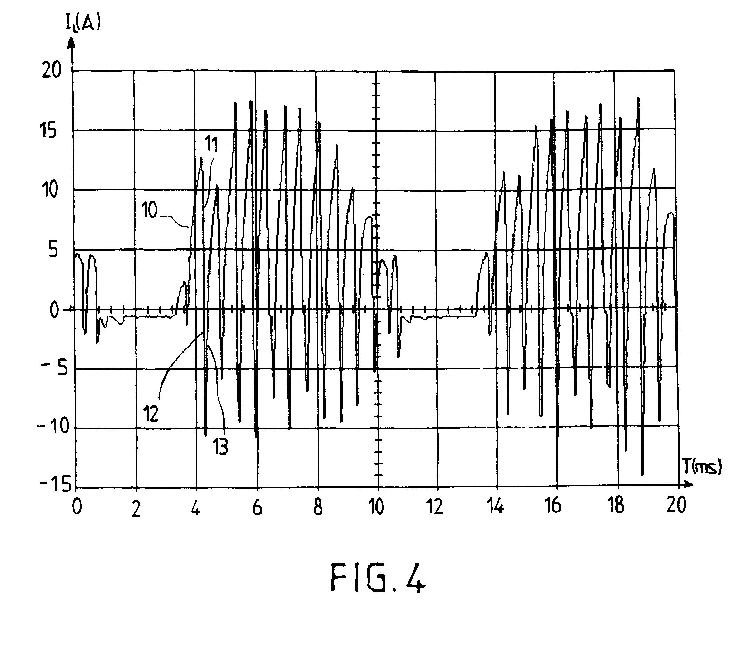

Comme on le voit à la figure 4, lorsque les transistors $T_1$ et $T_4$ sont conducteurs, la phase moteur est soumise à la tension du condensateur C, et voit donc le courant $I_L$, qui le traverse, croître, correspondant à la rampe 10.

Lorsque les transistors $T_1$ et $T_4$ sont éteints, le courant $I_L$ circulant dans la phase moteur ne pouvant s'éteindre instantanément du fait du caractère inductif du moteur, circule donc à travers les diodes de roue libre $D_2$ et $D_3$.

Ainsi, lorsque les diodes $D_2$ et $D_3$ sont conductrices, l'inductance moteur L est soumise à l'opposé de la tension du condensateur C, ce qui induit la décroissance de l'intensité $I_L$.

Le courant $I_L$ circulant dans la diode $D_3$ ne pouvant traverser le pont redresseur, charge donc le condensateur C, augmentant donc la tension $U_F$ aux bornes de l'onduleur.

Cette tension augmentant, la décroissance du courant $I_L$ dans la phase moteur est accélérée, comme on le voit sur la rampe 11.

Par la suite, lorsque le courant $I_L$ devient nul, les transistors $T_2$ et $T_3$ sont commandés et le courant $I_L$ devient négatif et croît en valeur absolue (voire rampe 12).

De façon symétrique, lorsque les transistors $T_2$ et $T_3$ ne sont plus commandés, les diodes de roue libre $D_4$ et $D_1$ deviennent conductrices, ce qui provoque la décroissance de la valeur absolue du courant $I_L$ jusqu'à une valeur nulle (voire rampe 13).

Par la suite, les transistors $T_1$ et $T_4$ sont commandés et le fonctionnement correspond à ce qui a déjà été décrit auparavant.

Lorsque les diodes de roue libre $D_3$-$D_2$ ou $D_1$-$D_4$ sont conductrices, le courant d'entrée de l'onduleur $I_e$, avec la convention de signe correspondant à la figure 1, est négatif.

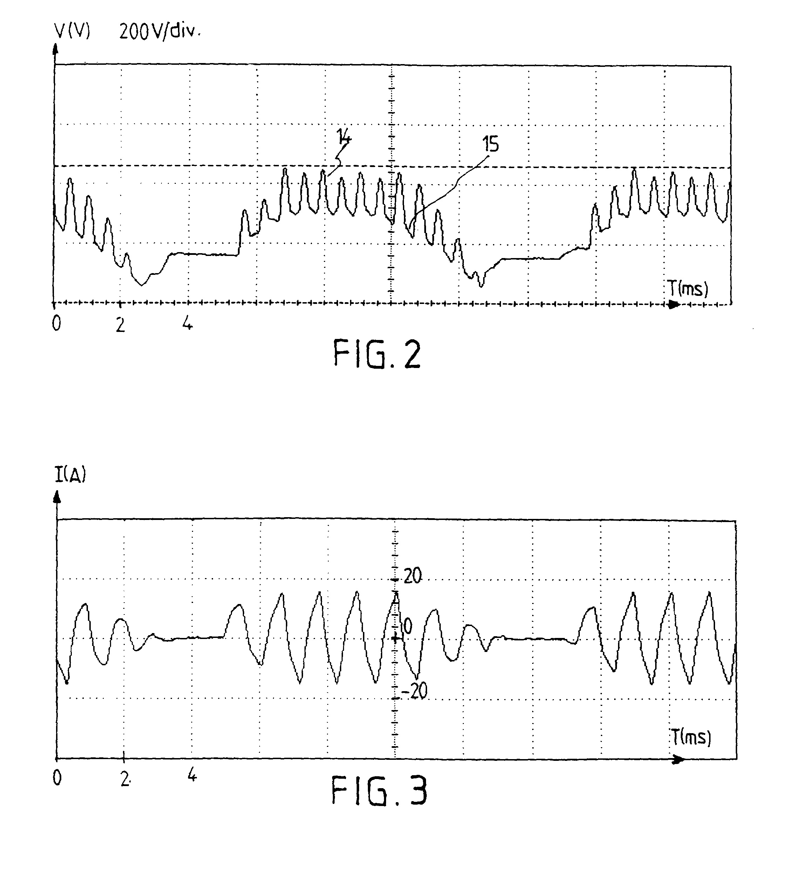

Ce courant négatif étant bloqué par le pont redresseur, il charge la capacité C dont sa tension présente donc des variations 14 comme illustré à la figure 2.

Par ailleurs, la tension illustrée à la figure 2 présente une composante 15 à deux fois la fréquence du réseau, soit typiquement 100 Hz, correspondant à la valeur de la tension réseau partiellement filtrée par le condensateur C.

Autrement dit, l'onduleur et donc le moteur ne fonctionnent non pas comme très généralement sur une tension constante, mais bien sur une tension variable.

Il s'ensuit que le moteur est le siège de courants harmoniques supérieurs à ceux qui le traversent lorsqu'il est alimenté en tension constante, puisque les valeurs crête et efficace s'éloignent de la valeur moyenne. Cela induit un léger surdimensionnement du bobinage et des parties aimantées du moteur dont l'influence sur le prix de revient est toutefois compensée par le faible coût du condensateur choisi conformément à l'invention.

La figure 3 est un oscillogramme représentant, pour un point de fonctionnement du moteur, la composition des courants qui produisent le flux magnétique dans le moteur. On observe un battement de fréquence dû à la fréquence du réseau, phénomène induit par la valeur faible du condensateur d'entrée, comme précédemment expliqué.

Selon une autre caractéristique de l'invention, le moteur utilisé dans la configuration conforme à l'invention présente un nombre de paires de pôles supérieur ou égal à deux, et préférentiellement égal à trois.

En effet, on a constaté que l'utilisation d'un moteur à quatre ou six pôles permet d'obtenir, pour un couple et un courant identique, une inductance phase dans un rapport du nombre de paires de pôles. Autrement dit, un moteur à trois paires de pôles présente une inductance, en première approximation trois fois inférieure à celle d'un moteur de puissance identique mais à deux pôles. Il s'ensuit que la valeur du condensateur de filtre C, choisi conformément à l'invention, est largement inférieure aux valeurs des condensateurs utilisés habituellement, ce qui permet de les choisir dans une gamme technologiquement moins coûteuse.

Par ailleurs, comme déjà dit, l'utilisation d'un filtre capacitif de relativement faible valeur permet de limiter également les harmoniques de courant injectés sur le réseau d'alimentation alternatif, et de permettre à l'appareil équipé du moteur caractéristique de respecter les normes en vigueur notamment concernant les appareils électroménagers.

A titre d'exemple, on utilise un moteur de 1200 W, tournant à 35000 tours par minute, et comportant trois paires de pôles, et présentant une inductance de phase égale à deux mH.

La tension réseau est de 230 V, et peut monter jusqu'à 358 V crête. L'onduleur choisi est équipé de transistors bipolaires dont le $V_{CE0}$ vaut 600 V. Le condensateur du filtre d'entrée caractéristique est un condensateur polyester, de capacité égale à 4,7 $\mu$F.

Dans ce cas de figure, les courants harmoniques rejetés sur le réseau alternatif sont très inférieurs aux taux autorisés par la majorité des normes régissant les réjections harmoniques des appareils électroménagers.

Comme déjà dit, l'invention ne se limite pas à la structure d'onduleur de tension décrite en détail ci-avant, mais au contraire couvre les variantes dans lesquelles l'onduleur présente un nombre réduit d'interrupteurs statiques, comme par exemple illustré à la figure 5. Dans ce cas de figure, le moteur comprend deux enroulements ($B_1$, $B_2$) couplés magnétiquement selon les points figurés et présentant une borne commune ($e_1$, $s_2$). L'onduleur comporte deux interrupteurs statiques ($T_{11}$, $T_{12}$) connectés chacun à une borne ($s_1$, $e_2$) de l'enroulement différente de la borne commune, comportant également des diodes, respectivement $D_{11}$ et $D_{22}$ montées en antiparallèle. Un circuit de récupération est composé des diodes $D_{R1}$, $D_{R2}$ et de l'impédance $Z_2$. D'autres structures d'onduleur peuvent également être adoptées, dès lors que le principe de l'invention est respecté, à savoir que la capacité du condensateur de filtrage en sortie de pont est telle que la tension à ses bornes varie de façon importante lors du transfert d'énergie de l'inductance vers le condensateur lors des commutations.

Il ressort de ce qui précède que le circuit d'alimentation, et le moteur conforme à l'invention, présentent de multiples avantages et notamment :

- la possibilité d'adopter un condensateur de filtrage continu appartenant à une gamme technologiquement moins coûteuse que les condensateurs électrolytiques habituellement utilisés pour ce genre de montage ;
- une commutation facilitée par une extinction rapide du courant dans la phase moteur, dans la phase de conduction ou diode de roue libre ;
- une faible réjection d'harmoniques de courant sur le réseau alternatif d'alimentation.

## Applications industrielles

Le moteur et son dispositif d'alimentation conformes à l'invention peuvent présenter de multiples applications, notamment dans le domaine de l'électroménager, et plus particulièrement dans l'entraînement d'organes tournants tels que ventilateurs ou turbines. Il trouve donc une application toute naturelle dans les aspirateurs électriques.

## Revendications

1. Ensemble moteur à commutation électronique, tel que notamment un moteur sans collecteur et dispositif d'alimentation dudit moteur à partir d'un réseau de tension alternative de tension crête maximale $E_{max}$, composé :

   - d'un pont redresseur (2) connecté au réseau de tension alternative ;
   - d'un filtre capacitif connecté en sortie du pont redresseur, constitué d'au moins un condensateur de capacité C ;
   - d'un onduleur de tension (4) connecté aux bornes du filtre capacitif (C), et comportant au moins un interrupteur statique ($T_1$, $T_2$, $T_3$, $T_4$), chaque interrupteur étant apte à supporter une tension maximale $V_{CE0}$ entre ses bornes ;

- d'un moteur à commutation électronique de puissance nominale P, et présentant une inductance de phase de valeur L,

  **caractérisé en ce que** la capacité C du filtre capacitif est supérieure à :

$$\frac{5.\,P^2 L}{E_{\max}^2 \left( V_{CE0}^2 - E_{\max}^2 \right)}$$

et inférieure à :

$$\frac{500.\,P^2 L}{E_{\max}^2 \left( V_{CE0}^2 - E_{\max}^2 \right)}$$

2. Ensemble selon la revendication 1, **caractérisé en ce que** l'onduleur de tension comporte deux bras connectés aux bornes du filtre capacitif (C), chaque bras comportant deux interrupteurs statiques ($T_1$, $T_2$, $T_3$, $T_4$) en série.

3. Ensemble selon la revendication 1, **caractérisé en ce que** l'onduleur de tension comporte deux bras connectés aux bornes du filtre capacitif (C), chaque bras comportant un interrupteur statique.

4. Ensemble selon l'une des revendications 1 à 3, **caractérisé en ce que** le condensateur est un condensateur polyester.

5. Ensemble selon la revendication 1, **caractérisé en ce que** le moteur comporte un nombre de pôles supérieur ou égal à quatre.

6. Ensemble selon la revendication 5, **caractérisé en ce que** le moteur comporte un nombre de pôles égal à six.

7. Aspirateur électrique **caractérisé en ce qu'**il comporte un ensemble selon l'une des revendications 1 à 6.

**Patentansprüche**

1. Motorbaugruppe mit elektronischer Kommutierung, wie insbesondere ein kollektorloser Motor mit einem Netzteil, um diesen Motor aus einem Wechselstrom-Versorgungsnetz mit einem Spitzenwert der Spannung von $E_{max}$ zu speisen, mit:

   - einer Gleichrichterbrücke (2), die mit dem Wechselstromnetz verbunden ist;

   - einem an den Ausgang der Gleichrichterbrücke angeschlossenen kapazitiven Filter, das aus wenigstens einem Kondensator der Kapazität C gebildet ist;

   - einem mit den Anschlüssen des kapazitiven Filters (C) verbundenen Spannungswechselrichter (4), der wenigstens einen statischen Schalter ($T_1$, $T_2$, $T_3$, $T_4$) umfaßt, wobei jeder Schalter eine maximale Spannung $V_{CE0}$ zwischen seinen Anschlüssen aushalten kann;

   - einem Motor mit elektronischer Kommutierung der Nennleistung P, der eine Phaseninduktivität der Größe L aufweist,

   **dadurch gekennzeichnet, daß** die Kapazität C des kapazitiven Filters größer als

$$\frac{5 \cdot P^2 L}{E_{max}^2 \left( V_{CEO}^2 - E_{max}^2 \right)}$$

und kleiner als

$$\frac{500 \cdot P^2 L}{E_{max}^2 \left( V_{CEO}^2 - E_{max}^2 \right)}$$

ist.

2. Baugruppe nach Anspruch 1, **dadurch gekennzeichnet, daß** der Spannungswechselrichter zwei Zweige umfaßt, die mit den Anschlüssen des kapazitiven Filters (C) verbunden sind, wobei jeder Zweig zwei statische Schalter ($T_1$, $T_2$, $T_3$, $T_4$) in Reihe umfaßt.

3. Baugruppe nach Anspruch 1, **dadurch gekennzeichnet, daß** der Spannungswechselrichter zwei Zweige umfaßt, die mit den Anschlüssen des kapazitiven Filters (C) verbunden sind, wobei jeder Zweig einen statischen Schalter umfaßt.

4. Baugruppe nach einem der Ansprüche 1 bis 3, **dadurch gekennzeichnet, daß** der Kondensator ein Polyesterkondensator ist.

5. Baugruppe nach Anspruch 1, **dadurch gekennzeichnet, daß** der Motor eine Polzahl aufweist, die gößer als oder gleich vier ist.

6. Baugruppe nach Anspruch 5, **dadurch gekennzeichnet, daß** der Motor eine Polzahl aufweist, die gleich sechs ist.

7. Elektrische Saugvorrichtung, **dadurch gekennzeichnet, daß** sie eine Baugruppe nach einem der Ansprüche 1 bis 6 enthält.

**Claims**

1. An electronically-switched motor assembly such as, in particular, a brushless motor and a device for powering said motor from an AC network having a maximum peak voltage $E_{max}$, comprising:

   - a rectifier bridge (2) connected to the AC network;
   - a capacitive filter connected to the output of the rectifier bridge, the filter being constituted by at least one capacitor of capacitance C;
   - a voltage inverter (4) connected to the terminals of the capacitive filter (C) and comprising at least one static switch ($T_1$, $T_2$, $T_3$, $T_4$), each switch being capable of withstanding a maximum voltage $V_{CE0}$ across its terminals; and
   - an electronically-switched motor of nominal power P, presenting phase inductance of value L;

   the assembly being **characterized in that** the capacitance C of the capacitive filter is greater than:

$$\frac{5.P^2 L}{E_{max}^2 (V_{CEO}^2 - E_{max}^2)}$$

and less than:

$$\frac{500.P^2L}{E_{max}^2(V_{CEO}^2 - E_{max}^2)}$$

2. An assembly according to claim 1, **characterized in that** the voltage inverter has two branches connected to the terminals of the capacitive filter (C), each branch comprising two static switches ($T_1$, $T_2$, $T_3$, $T_4$), in series.

3. An assembly according to claim 1, **characterized in that** the voltage inverter comprises two branches connected to the terminals of the capacitive filter (C), each branch comprising one static switch.

4. An assembly according to any one of claims 1 to 3, **characterized in that** the capacitor is a polyester capacitor.

5. An assembly according to claim 1, **characterized in that** the motor has a number of poles greater than or equal to four.

6. An assembly according to claim 5, **characterized in that** the motor has a number of poles equal to six.

7. An electrical vacuum cleaner, **characterized in that** it includes an assembly according to any one of claims 1 to 6.

FIG. 1

FIG. 5

FIG. 2

FIG. 3

FIG.4